# EUROPEAN PATENT APPLICATION

(11) **EP 2 202 449 A1**
(43) Date of publication of application: **30.06.2010**
(21) Application number: 08022368.8
(22) Date of filing: 23.12.2008
(51) Int. Cl.: F21S 8/00, F21K 99/00, F21Y 101/02

(54) **LED light, in particular for use as dipped and/or dazzling light in automotive appliactions**

(71) Applicant: Lin, Tao, 200030 Shanghai (CN)
(72) Inventor: Lin, Tao, 200030 Shanghai (CN)
(74) Representative: Ferreccio, Rinaldo

(57) **Abstract**

The invention concerns an optical group for automotive applications, of the type comprising:
- a housing half-shell or case of a dazzling light and of a dipped light;
- a transparent protective cover of said half-shell;
- each light including a plurality of LED lighting electric devices mounted and powered on a support plate and each equipped with at least one LED light source;
- **characterised in that** it also comprises:
- a corresponding inverted truncated cone shaped waveguide associated with the light source to diffuse the light beam generated by said source;
- a lens supported in a predetermined spaced apart relationship with said light source

Advantageously, according to the invention, the base ends (7) of the transparent legs (5) are in contact with a resin (9) that does not absorb light radiation.

In this way there is a saturation effect of the light beam taken away through the support legs of the waveguide and the luminosity of the LED lighting device (1) is increased for an equal level of power consumption, making the use of the LED lighting devices (10) effective to make dipped lights (30) or dazzling lights (40).

## Description

The present invention refers to an LED light, in particular for use as dipped and/or dazzling light in automotive applications.

In its wider meaning, the invention concerns an optical group for automotive applications, like for example a dipped and/or dazzling light, including a plurality of LED lighting electric devices.

### Field of application

As is well known, over the past few years a new artificial lighting technology has rapidly become popular, based upon semiconducting light emitting diodes, so-called LEDs (acronym for Light Emitter Diode). LEDs are powered from a suitable electronic circuit and their light is generated by a physical process called "Electron-hole recombination" that results in the emission of light particles, in other words photons.

The average life of an LED is estimated to be tens of times greater than most light bulbs or discharge lamps. Moreover, LEDs consume much less electrical energy and can also play a fundamental role in the reduction of electrical energy consumption on board vehicles, both those actuated with conventional motors and those actuated by electric motors.

Currently, LEDs are still relatively expensive, set to fall in the future as they are used more extensively, but LED lighting can already offer savings, over the medium and long term, thanks to their lower energy consumption, their longer lifetime and their extremely low maintenance.

### Prior art

In the field of automobiles LED lights have only recently had an application.

At the moment, only some models of automobiles of the Volkswagen-Audi group are equipped with stop lights and/or parking lights made with LED lighting electric devices.

On the market there are front or rear optical groups of some Audi models that are equipped with LED lights as direction indicators and parking lights, also as spare parts.

It should be said that it was only thanks to a derogation granted by the European Union authorities that the Audi group put on sale these lights anticipating the legislation approving LED lights that came into force during the current year 2008.

Up to now the automobile sector has seen the spread of Xenon lights that are gradually replacing halogen lights.

Xenon lights, which can be classified in the category of discharge lamps, light up an incredibly wider area of road than halogen lights, with a much greater power despite lower electricity consumption. In a Xenon light the amount of lumens generated for each watt consumed is five times greater than a halogen light.

However, although LED technology has not reached a luminosity point such as to be able to compete with Xenon lights at reasonable costs, LEDs are still the absolute champions in terms of savings thanks to an incredibly higher efficiency than any other lighting technology, including Xenon.

Moreover, LED lighting reaches maximum luminosity operation instantly and thus does not even need the short heating times of Xenon lights.

Moreover, LEDs do not require maintenance, do not burn out and do not lose colour over time and they have a theoretical lifetime even longer than the average life of the vehicle on which they can be mounted.

Unlike Xenon lights or Halogen lights, LEDs emit a clean and concentrated light in an almost pointed beam, reducing the dispersion of the light flow.

This characteristics does, however, make them more suitable for making stop lights, reversing lights, indicators, fog lights, courtesy lights, door lights, dashboard lights, parking lights, number plate lights for which what counts most is a vivid and bright colour that is highly visible rather than powerful lighting up of the surrounding area.

For this reason the prior art has not yet provided LED solutions as dipped lights and/or dazzling lights and fog headlamps.

The technical problem forming the basis of the present invention is to devise an optical group for automotive applications having structural and functional characteristics such as to allow a dipped light, or else a dazzling light or a fog headlamp to be made including a plurality of LED lighting electric devices.

Another purpose of the invention is to make an LED light, in particular for use as dipped and/or dazzling light in automotive applications, with substantially lower operating and consumption costs than those for example of a Xenon light currently proposed by the prior art, for the same lighting capability.

### Summary of the invention

The technical problem is solved by an optical group for automotive applications, of the type comprising:
- a housing half-shell or case of a dazzling light and of a dipped light;
- a transparent protective cover of said half-shell;
- each light including a plurality of LED lighting electric devices mounted and powered on a support plate and each equipped with at least one LED light source;
- **characterised in that** it also comprises:
   - a relative inverted truncated cone shaped waveguide associated with the light source to diffuse the light beam generated by said source;
   - a lens supported in a predetermined spaced apart relationship with said light source;
   - transparent support legs formed in one piece with the waveguide and base ends proximal to the light source fixed to said plate around the light source;
   - the base ends of said transparent legs being in contact with a resin that does not absorb light radiation.

In this way, there is a saturation of the light beam inside the transparent support legs of the waveguides and a corresponding increase in light intensity emitted by the LED device for the same electrical power consumed. It follows from this that the light as a whole is able to emit the light power required to operate as a dipped light or as a dazzling light.

Advantageously, the aforementioned resin is a silicon epoxy resin with high heat conduction. In this way there is the further advantage that part of the heat produced by the LED light source is taken away through the silicon resin reducing the standard thermal conditions of the LED lighting devices included in each light.

Other characteristics and advantages of the optical group according to the present invention shall become clearer from the following description of an example embodiment thereof, given for indicative and not limiting purposes with reference to the attached drawings.

In such drawings:

### Brief description of the drawings

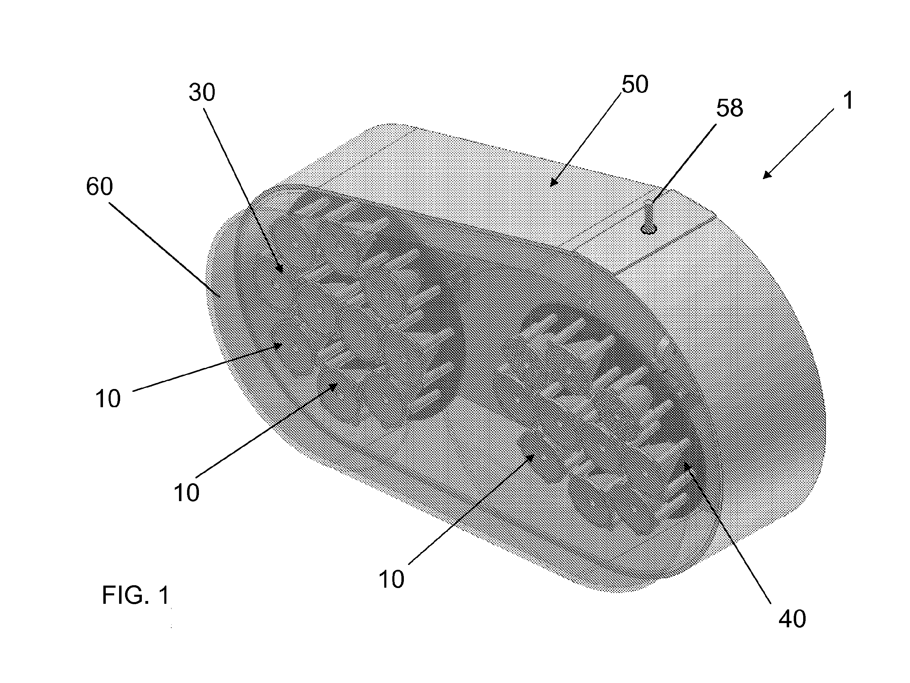

- figure 1 shows a perspective and schematic view of an optical group for automobile use made in accordance with the present invention;
- figure 2 shows a perspective and schematic view of a detail of the optical group of figure 1;
- figure 3 shows a perspective view of a detail of the optical group according to the present invention;

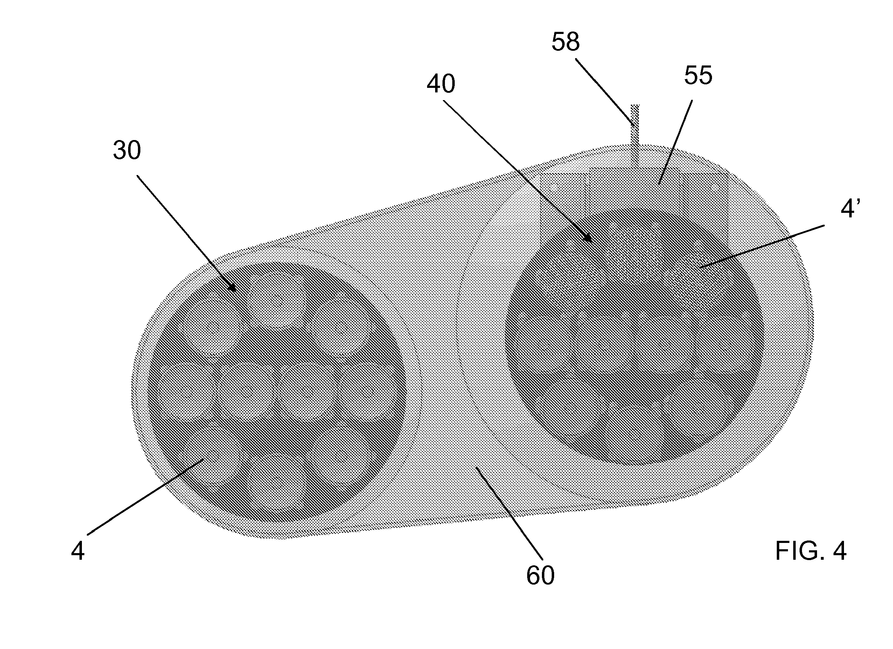

- figure 4 shows a schematic front view of the particular optical group of figure 3;

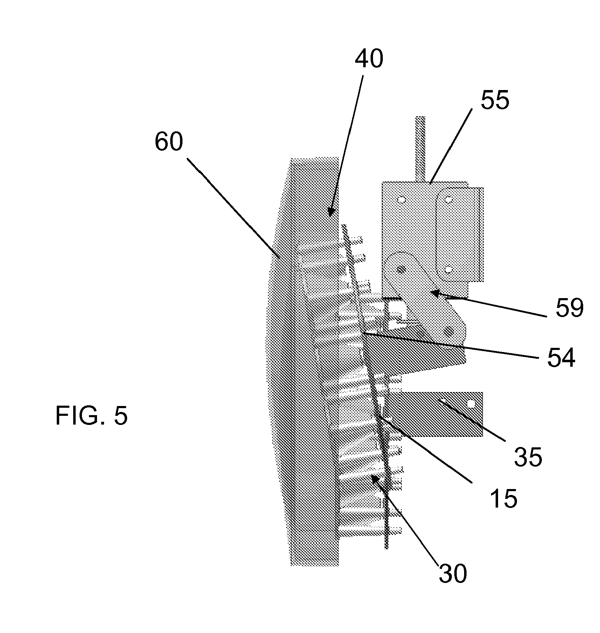

- figure 5 shows a schematic side view of the particular optical group of figure 3;

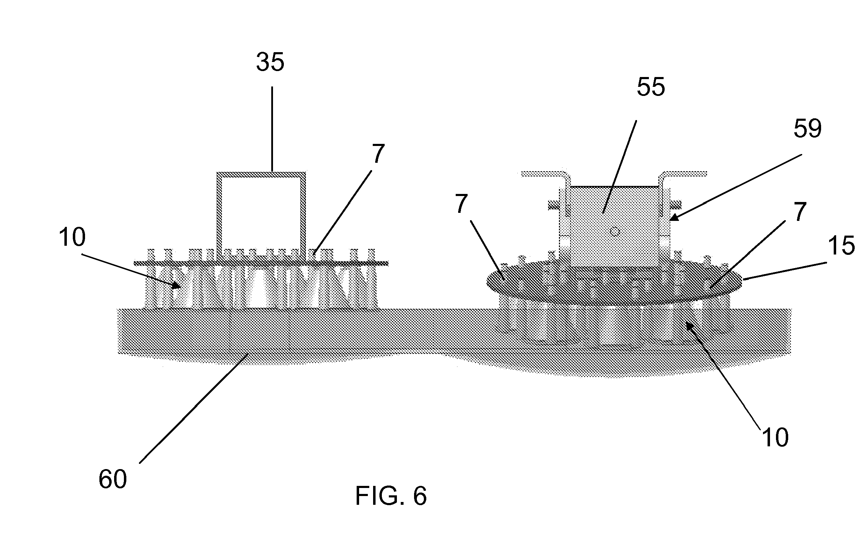

- figure 6 shows a schematic view from above of the particular optical group of figure 3;

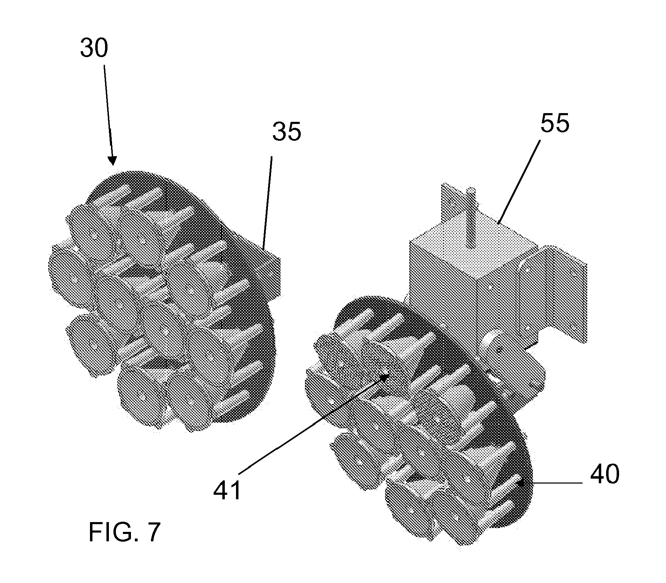

- figure 7 shows a perspective view of a fixed dazzling light and of a mobile dipped light included in the optical group according to the invention;
- figure 8 shows a perspective and schematic view of a single LED lighting electric device included in the lights of the optical group according to the invention;

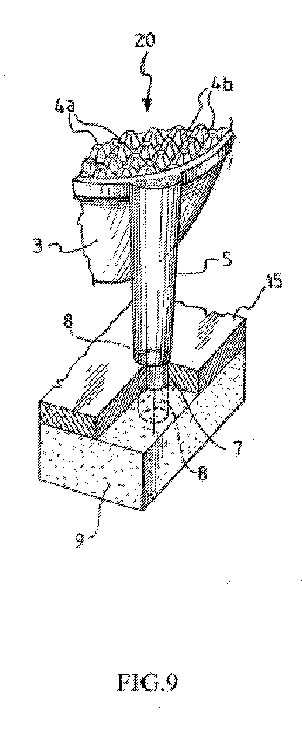

- figure 9 shows a vertical elevation view of a detail of the LED lighting device of figure 8;
- figure 10 shows a perspective view of a further detail of the optical group according to the present invention;
- figure 11 shows a schematic front view of the particular optical group of figure 10.

### Detailed description

With reference to such drawings, an optical group for automotive applications, for example for automobiles, lorries or motorcycles is globally and schematically indicated with 1.

The optical group 1 is structured to respect the laws currently in force, for example art. 224 of the regulations for making items n° 68 and n° 69 of the Italian Highway Code.

The optical group 1 comprises a fixed dazzling light 30 and a mobile light 40 that performs the dual function of parking light and dipped light.

Each fixed or mobile light, 30 or 40, includes a plurality of LED lighting electric devices 10 that shall be described in greater detail hereafter.

The fixed light 30 comprises, for example, a dozen of said LED lighting electric devices 10.

The mobile light 40 also comprises a dozen of said LED lighting electric devices, three of which are equipped with diffusion lenses 44 to make the parking light portion 41 of the light 40.

The optical group 1 is housed in a shell or case 50 preferably made from synthetic plastic material. The case 50 is substantially oblong shaped whereas the lights 30 and 40 housed in it are essentially circle shaped.

The case 50 is sealed closed by a transparent cover 60 or cap that acts as a screen against atmospheric agents.

Advantageously, the LED lighting electric devices 10 included in each of the lights 30 or 40, fixed or mobile, are mounted and powered on a circle shaped support plate 15. The plate 15 is substantially a PCB (Printed Circuit Board) type board equipped with electrical connections obtained by moulding and/or deposition with a thin film.

Advantageously, according to the invention, the rear of the plate 15 is coated with a silicon epoxy resin, as shall become clearer from the rest of the description.

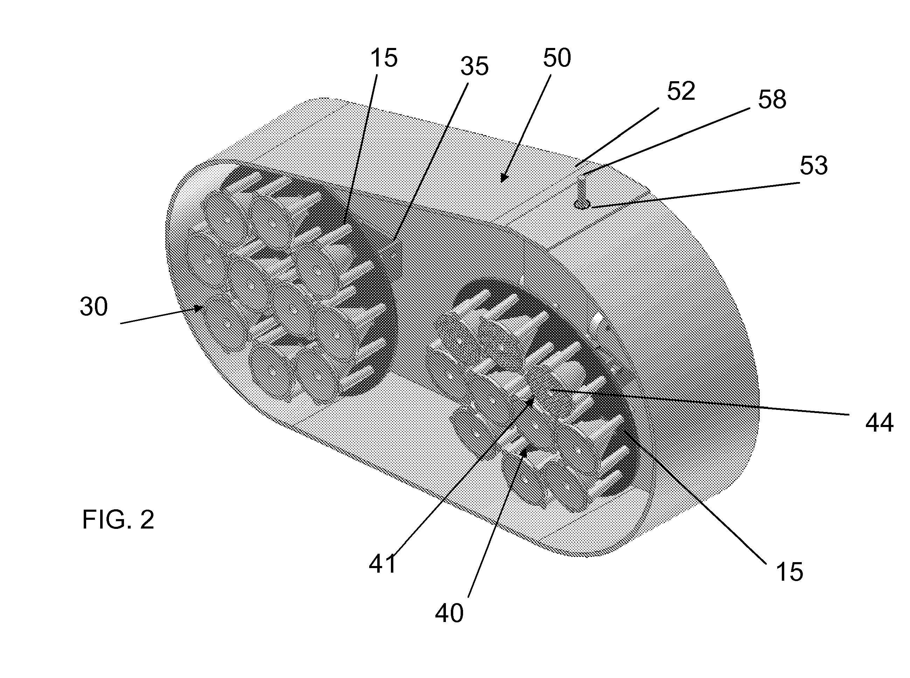

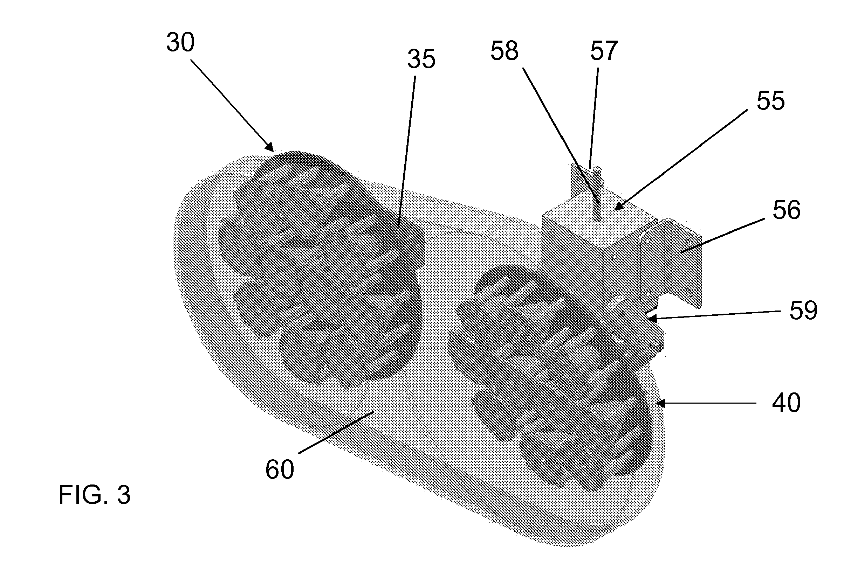

The plate 15 of the fixed light 30 is fixedly connected to the case 50 through a support 35, which can be seen in figures 2 and 3.

The plate 15 of the mobile light 40, on the other hand, is fixedly connected to the end 54 of an articulated arm 59 actuated by motorised means 55, to adjust the trim and the inclination of the mobile dipped light 40.

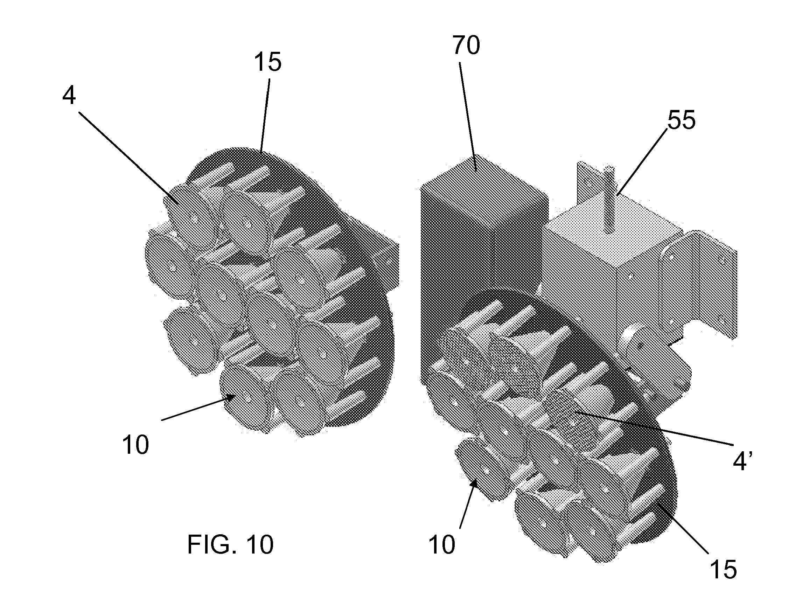

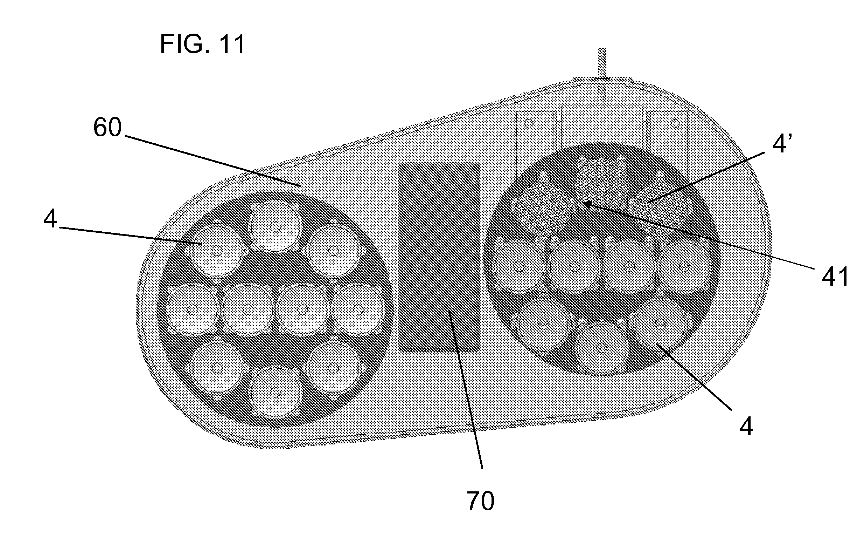

The motorised means 55 are preferably actuated by electric motors slaved to a control unit 70 housed inside the case 50 between the two lights 30 and 40 and visible in figures 10 and 11.

The motorised means 55 are contained inside a box fixed to the case 50 of the optical group 1 through flanges 56 and 57.

From the box of the motorised means extends the articulated arm 59 having the opposite end connected to the support plate 15 of the mobile light 40.

The articulated arm 59 is made up of two portions connected together and actuated in unison on opposite sides of the box containing the motorised means to ensure a particularly fine adjustment during the angular displacements to set the orientation of the light 40.

A pin 58 extending from the box of the motorised means 55 passes straight through a hole 53 made on an upper edge 52 of the case 50 to allow the optical group 1 to be fixed to the automobile.

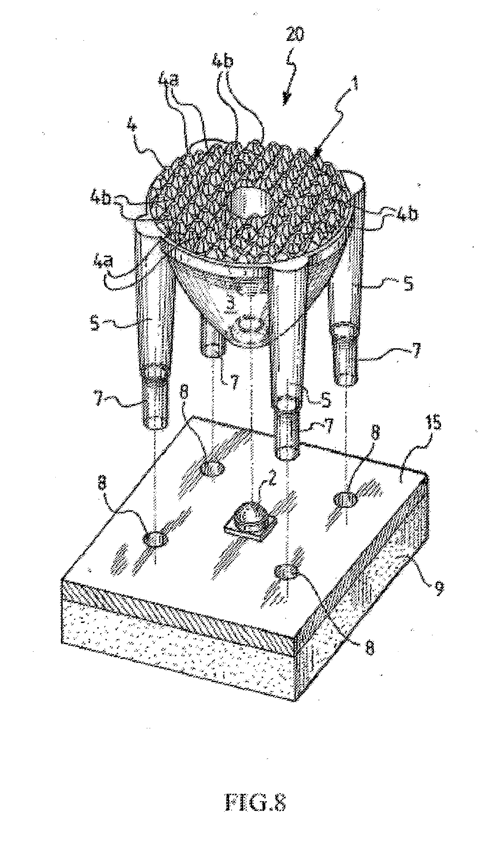

Now, with particular reference to the example of figure 8, the structure of the LED lighting electric devices 10 included in the lights 30 and 40 is described in detail.

Each device 10 can also be defined as an LED lamp associated with an optical element for diffusing the light beam produced by the lamp.

Such an LED lighting electric device 10 comprising at least one LED (Light Emitter Diode) light source 2 based upon a semiconductor light emitting diode.

The specific type of LED light source 2 is not covered by the present invention in the sense that the source 2 can be a single diode or a multichip LED formed from at least three diodes.

For example, leds are available in a very wide range of "pure" colours, i.e. obtained without the use of filters placed in front of the light source and emitted "naturally" by the led itself. Multichip leds, on the other hand, are formed from three diodes - a red one, a blue one and a green one - that when suitably controlled can create thousands of colour combinations.

For the purposes of the present invention what counts is exclusively that the device 10 comprises at least one LED light source 2 mounted and powered on a support plate 15.

It is also commonly said that the LED is a primary optical system that is mounted on a primary reflector, for example a metallic layer, which is fixedly connected to a printed circuit board.

The LED light source 2 has an associated waveguide 3 that acts as a diffusing lighting body intended to transmit, direct and diffuse the light beam generated by the light source 2.

The waveguide 3 has an essentially inverted truncated cone shaped structure extending with the smaller base at the LED light source 2 and the larger base distal from the LED source 2.

The larger base is substantially formed from an optical element intended to interact with a light beam emitted by the LED.

In other words, the larger base of the waveguide 3 comprises a lens 4 arranged in a predetermined spaced apart relationship from the LED light source 2 in a position substantially perpendicular to the main lighting direction of the light source 2.

The lens 4 allows the light beam emitted by the LED light source 2 to be focused keeping it within a predetermined emission angle with the minimum dispersion.

The inverted truncated cone shape of the waveguide 3 has the function of directing and diffusing the light beam emitted by the LED onto the lens 4 operating substantially as a diffusing body of the light beam.

To keep the waveguide 3 in position transparent support legs 5 are provided, formed in one piece with the waveguide and extending around said light source 2. In some other embodiments the legs 5 are formed in one piece around the perimeter of the lens 4.

More specifically, there are four of such legs 5 and they extend parallel to one another around the light source 2. The legs 5 are arranged in equally angularly spaced position, 90° apart, around the waveguide 3.

Therefore, the legs 5 have an end formed in one piece with the waveguide 3, at the lens 4, and have the opposite base or foot ends fixedly connected to the support plate 15 of the light source 2.

Even more specifically, the legs 5 are small cylindrical transparent columns, slightly tapered towards their base, and having a base end portion 7 fixed to the support plate 15 that forms the base both of the fixed light 30, and of the mobile light 40.

The base end portions 7 have a smaller diameter than the average diameter of the column-shaped legs 5 to be inserted with pressure each in a corresponding hole 8 formed in the plate 15 around the light source 2.

In the example embodiment described here purely for indicative and not limiting purposes, there are four holes 8 arranged with an angular spacing of 90° around the light source 2, as if they were the vertices of a square running around said light source 2.

The waveguide 3 and the corresponding support legs 5, formed in one piece, are made from a transparent synthetic plastic material, for example a polycarbonate.

The lens 4 can also be formed in one piece with the waveguide 3 as larger base of the truncated cone shaped body.

Alternatively, the lens 4 can be fixedly connected as the larger base of the waveguide 3 shaped like a truncated cone.

The lens 4 can be simply a transparent layer, in the shape of a circular crown with a central through hole. This type of lens is preferred for example for the dazzling light 30.

The lens 4 can also have a more complex structure, for example with a pair of surfaces arranged parallel to one another a predetermined distance apart, a flat surface facing towards the light source 2 and another prism shaped outer surface to make a diffusion lens that we shall indicate in the drawings with the reference numeral 4'.

By prism shaped surface we mean to define a surface that has a plurality of prism shaped elements adjacent to one another and equipped with inclined portions 4a or facets 4b such as to be able to create phenomena of reflection, refraction, diffraction or polarisation of the light beam that passes through the lens 4.

The aforementioned prism shaped elements can be right pyramids or frustums of right pyramid brought close together and having the base parallel to the first flat surface.

This type of diffusion lens 4' is preferred to make the parking light portion 41 of the mobile and orientable light 40.

Advantageously, according to the present invention, the base ends 7 of the legs 5 are in contact with a resin 9 that does not absorb light radiation.

For the purposes of the present invention it is sufficient that the ends of the legs 5 be covered or in any case darkened by the resin 9 so that the light radiation channelling along the small transparent columns is unable to leave by the base.

Preferably, however, the base ends 7 of the legs 5 are embedded in the resin 9 on the opposite side of the plate 15 with respect to where the light source 2 is located.

The resin 9 is a silicon resin that is a good heat conductor.

Advantageously, moreover, the resin 9 is an epoxy resin that lends itself to being shaped through injection moulding.

For the purposes of the invention it is sufficient for some of the lighting devices 10 to be treated with this resin, whereas others could also be without resin. For example, the three devices 10 forming the parking light portion 41 of the light 40 could also be without resin.

Purely as a non-limiting example we point out that the resin 9 can be of the type commercially known by the trade name FT0610 that defines a specific resin for insulating, sealing and protecting electrical transformers.

The low exothermy of this resin avoids damaging the components during polymerisation thanks to the low heat production. Moreover, thus epoxy resin FT0610, offers excellent heat dissipation.

The high dielectric, mechanical, physical and chemical characteristics of this resin give the components coated with it total protection against humidity and chemical agents.

The presence of the resin 9 on the base ends 7 of the transparent support legs 5 of the waveguide 3 allows the light radiation emitted by the source 2 and diffused by the waveguide 3 not to be attenuated or damped in its intensity by the presence of the transparent legs 5.

The phenomenon that occurs in the device according to the present invention is relatively complex and we can define it as light "saturation".

Basically, the light beam that crosses the legs 5 in the opposite direction, i.e. in the direction of the source, with respect to the desired and main direction of emission of the beam itself, finds its path blocked by the silicon resin 9.

It is as if each of the legs 5 were in a situation of saturation of the light beam with the result that none of them any longer absorbs part of the light beam produced by the source 2.

Thus, unlike what currently occurs for the solutions of the prior art, the transparent support legs 5 of the waveguide 3 do not in any way take away light from the main light beam emitted by the source 2 and do not contribute to reducing the light intensity of the source 2.

To use a plumbing analogy, it is as if there was a main pipe carrying a fluid that has branches along which the fluid finds its path blocked. In this case the branches could not in any way contribute to taking fluid away from the main pipe.

By analogy, the light beam that passes through each of the transparent legs 5 has no way to pass or be absorbed at the ends thereof located near to the source 2 and it reaches a state of saturation that prevents other arriving light from passing back through the small transparent column.

In other words, the electromagnetic light wave that passes through the transparent support legs 5 of the waveguide 3 reaches the ends 7 coated with resin 9 and saturates the corresponding transparent leg with light.

Tests carried out by the Applicant have demonstrated that the light intensity of the LED lighting devices 10 used in the lights 30 and 40 according to the invention is surprisingly increased by 40% and more compared to the same device made according to the prior art placed in the same operating conditions.

This structure of the devices 10 according to the invention achieves a further important advantage represented by the fact that the silicon resin 9 takes away the heat produced at the base of the LED light source 2 and thus allows full performance operating conditions to be reached that substantially coincide with those theoretically foreseen for the regular and correct operation of a semiconductor LED.

With the device according to the invention the operating temperature at the base of the LED is around 45°C whereas that of the light source is around 70°C, which represents the optimal theoretical combination of operation for a semiconductor LED.

This gives the great advantage that the LED device according to the invention can operate for a period that substantially coincides with the theoretical operating time equal to 100,000 hours.

It can therefore be understood how important and far-reaching the present invention is, making it possible to provide automobile lights including LED lighting electric devices 10 in which the totality of the light beam emitted by the source is exploited and directed for lighting purposes whilst, at the same time, the light source is kept at a regular operating temperature foreseen by the theoretical specifications of semiconductor LEDs.

It follows from this that with the lighting devices 10 according to the invention it is possible to obtain better optical performance of the lights 30 and 40, an increase in luminosity of the individual sources 2 and a reduction of the standard thermal conditions, if compared with the solutions of the prior art.

Now that the structure of the individual LED lighting devices 10 has been described in detail, let us return to the structure of the optical group 1 according to the invention to now describe its operation.

As we have seen, the optical group 1 can also be considered as made up of three parts:
- the fixed dazzling light 30;
- the mobile and orientable dazzling light 40;
- the portion 41 of the light 40 that acts as a parking light.

The control unit 70 is structurally independent and can also be housed outside of the optical group 1 by providing suitable quickcoupling electrical connections to connect it to the motorised means 55.

The control unit is equipped with a connector, not represented since it is conventional, for its electrical power and signal connection to a control unit for switching on the lights of the vehicle on which the optical group 1 is installed.

Following controls actuated by the user in the driving compartment of the vehicle, the control unit 70 receives electrical signals to approve the switching on even of the parking lights 41 alone. The three lighting devices 10 forming part of the portion 41 are switched on and the diffusion lenses 4' associated with these three LED lighting devices diffuse a low-intensity flow of light typical of parking lights.

All of the other LED lighting devices 10 of the lights 30 and 40 remain switched off.

When, on the other hand, the unit receives an electrical signal to approve the switching on of the dipped light 40, it switches on the totality of the devices 10 of the light 40 and at the same time controls the motorised means 55 so that the orientation or inclination of the mobile light 40 is adjusted based upon the trim of the vehicle.

All of this takes place through digital information of trims and positions stored in a memory contained in the control unit 70.

The inclination and the light intensity of the light 40 are adjusted so as not to dazzle other vehicles it meets.

When, on the other hand, the control unit receives an electrical signal to approve the switching on of the dazzling light 30, it activates with full power all of the LED lighting devices 10 of the fixed light 30.

At the same time, the inclination and the trim of the mobile light 40 is also modified so that the optical plane of such a light 40 coincides with the optical plane of the fixed light 30. In other words, the two support plates 15 of the lighting devices 10 of both of the lights 30 and 40 will be coplanar when the dazzling lights are switched on.

From the above description it can clearly be seen that the optical group 1 and the lights 30 and 40 of which it consists solve the technical problem and achieve the great advantage of allowing an automobile to be equipped with dazzling and dipped LED lights and not just stop lights, reversing lights, indicators, rear fog lights, courtesy lights or door lights.

This gives the further advantage that the electricity consumption to supply power to the optical groups substantially falls compared to today's solutions and those currently suggested by the prior art.

Last but not least advantages are represented by the greater efficiency, lifetime and production cost of the lights made according to the present invention.

## Claims

1. LED light for automotive applications, of the type comprising:
- a housing half-shell or case (50);
- a transparent protective cover (60) of said half-shell;
- a plurality of LED lighting electric devices (10) mounted and powered on a support plate or card (15) and each equipped with at least one LED light source (2);
- **characterised in that** it also comprises:
- a corresponding inverted truncated cone-shaped waveguide (3) associated with the light source (2) to diffuse the light beam generated by said source;
- a lens (4, 4') supported in a predetermined spaced apart relationship with said light source (2);
- transparent support legs (5) formed in one piece with the waveguide (3) and base ends (7) proximal to the light source (2) fixed to said card (15) around the light source (2);
- the base ends (7) of said transparent legs (5) being in contact with a resin (9) that does not absorb light radiation.

2. LED light according to claim 1, **characterised in that** said resin is a silicon epoxy resin.

3. LED light according to claim 2, **characterised in that** said silicon resin is a heat conductor.

4. LED light according to claim 1, **characterised in that** said base ends (7) are embedded in said resin (9) on the rear of said plate (15).

5. LED light according to claim 1, **characterised in that** it is a dazzling light (30) mounted fixed in said case (50).

6. LED light according to claim 1, **characterised in that** it is a dipped light (40) mounted mobile and orientable in said case (50) and with at least one portion (41) of said LED lighting electric devices (10) intended to operate as a parking light.

7. LED light according to claim 6, **characterised in that** said parking light portion (41) of said dipped light (40) comprises LED lighting devices (10) having respective diffusion lenses (4') with surface covered by a plurality of prism shaped elements adjacent to one another.

8. LED light according to claim 1, **characterised in that** said legs (5) are small cylindrical columns and their base ends (7) have a smaller diameter than the diameter of the corresponding legs (5), each to be forcibly inserted in a corresponding hole (8) formed in said plate (15) around said light source (2).

9. Optical group (1) for automotive applications, of the type comprising:
- a housing half-shell or case (50) of a dazzling light (30) and of a dipped light (40);
- a transparent protective cover (60) of said half-shell (50);
- each light (30, 40) including a plurality of LED lighting electric devices (10) mounted and powered on a support plate (15) and each equipped with at least one LED light source (2);
**characterised in that** each light comprises a structure according to claim 1.

10. Optical group according to claim 9, **characterised in that** said dazzling light (30) is mounted fixed in said case (50) and said dipped light (40) is mounted on a mobile support in said case (50).

11. Optical group according to claim 10, **characterised in that s**aid dipped light (40) comprises a portion (41) of said LED lighting electric devices (10) intended to operate as a parking light.

12. Optical group according to claim 11, **characterised in that** said parking light portion (41) of said dipped light (40) comprises LED lighting devices (10) having respective diffusion lenses (4') with surface covered by a plurality of prism shaped elements adjacent to one another.

13. Optical group according to claim 11, **characterised in that** said dipped light is associated with motorised means (55) slaved to an electronic control unit (70) and equipped with an articulated arm (59) having an end connected to the support plate (15) of the LED lighting devices (10) of the light (40).

14. Optical group according to claim 13, **characterised in that** said motorised means (55) direct the support plate (15) of the dipped light (4) so as to be coplanar to the support plate (15) of the fixed dazzling light when a signal approving the switching on of the dazzling light is received by said unit (70).
